# EUROPEAN PATENT APPLICATION

(11) **EP 4 135 331 A1**
(43) Date of publication of application: **15.02.2023**
(21) Application number: 22174119.2
(22) Date of filing: 18.05.2022
(51) Int. Cl.: H04N 21/2187, H04N 21/2347

(54) **METHOD FOR PROCESSING LIVE BROADCAST INFORMATION STREAM, ELECTRONIC DEVICE**

(30) Priority: 10.08.2021 CN 202110911860
(71) Applicant: Beijing Dajia Internet Information Technology Co., Ltd., Beijing 100085 (CN)
(72) Inventor: LIANG, Bo, Beijing, 100085 (CN); MA, Jun, Beijing, 100085 (CN); LIU, Lichuan, Beijing, 100085 (CN)
(74) Representative: Zimmermann, Tankred Klaus

(57) **Abstract**

A method, an apparatus and a system for processing a live broadcast information stream. The method includes: obtaining an encryption permission recognition result by recognizing an encryption permission for a target live broadcast room in response to a live broadcast request of the target live broadcast room sent by an anchor client; generating an encryption live broadcast indication and a stream pushing address of the target live broadcast room in response to the encryption permission recognition result indicating that the target live broadcast room is an encrypted live broadcast room, in which the encryption live broadcast indication is used to instruct a live broadcast source station to encrypt live broadcast information stream of the target live broadcast room; and sending the stream pushing address corresponding to the target live broadcast room to the anchor client, in which the stream pushing address indicates an address of the live broadcast source station.

## Description

### TECHNICAL FIELD

The disclosure relates to a field of live broadcast, and particularly to a method, an apparatus and a system for processing a live broadcast information stream, an electronic device, and a storage medium.

### BACKGROUND

With rapid development of the live broadcast technology, there is an increasing demand on keeping content of a live broadcast room secret. Some users (personal users/organizations/enterprises) may expect that the live broadcast content is merely watched by some audiences. Thus, it is desired to ensure a live broadcast information stream (mainly audio and video stream) of such live broadcast room is not revealed to an unauthorized third party.

### SUMMARY

According to one aspect of embodiments of the disclosure, a method for processing a live broadcast information stream is provided. The method includes obtaining an encryption permission recognition result by recognizing an encryption permission for a target live broadcast room in response to a live broadcast request of the target live broadcast room sent by an anchor client, and generating an encryption live broadcast indication and a stream pushing address of the target live broadcast room in response to the encryption permission recognition result indicating that the target live broadcast room is an encrypted live broadcast room. The encryption live broadcast indication is used to instruct a live broadcast source station to encrypt live broadcast information stream of the target live broadcast room. The method further includes sending the stream pushing address corresponding to the target live broadcast room to the anchor client, in which the stream pushing address indicates an address of the live broadcast source station.

Optionally, the method further includes receiving a first stream pulling request sent by an audience client of the target live broadcast room, in which the first stream pulling request includes an identification of the audience client and a room identification of the target live broadcast room; obtaining a verification token generated based on the identification of the audience client and the room identification from a key manager in response to detecting the encryption live broadcast indication; obtaining a stream pulling address corresponding to a first encrypted information stream from the live broadcast source station, in which the first encrypted information stream is obtained by encrypting the live broadcast information stream based on an encryption key in a key pair generated by the key manager, and the stream pulling address indicates an address of an information stream distribution client of the first encrypted information stream; and sending the stream pulling address and the verification token to the audience client, in which the verification token is used to verify an identity of the audience client in response to the audience client obtaining an decryption key in the key pair from the key manager, and the stream pulling address is used to obtain the first encrypted information stream from the information stream distribution client, and the audience client is configured to obtain the live broadcast information stream by decrypting the first encrypted information stream based on the decryption key.

Optionally, obtaining the verification token generated based on the identification of the audience client and the room identification from the key manager includes sending a token obtaining request to the key manager, in which the token obtaining request includes the identification of the audience client and the room identification, and the identification of the audience client and the room identification are used to generate the verification token; and receiving the verification token sent by the key manager.

Optionally, the first stream pulling request further includes version information of a live broadcast application of the audience client, and obtaining the verification token generated based on the identification of the audience client and the room identification from the key manager includes sending a token obtaining request to the key manager, in which the token obtaining request includes the version information, the identification of the audience client and the room identification, the version information is used to perform version compatibility verification, and the identification of the audience client and the room identification are used to generate the verification token; and receiving the verification token sent by the key manager in response to a result of the version compatibility verification indicating that the version information includes an application version compatible with an encryption and decryption algorithm corresponding to the key pair.

Optionally, the method further includes sending version update information to the audience client in response to the result of the version compatibility verification indicating that the version information does not include the application version compatible with the encryption and decryption algorithm, in which the version update information is used to prompt the audience client to update the live broadcast application to the application version compatible with the encryption and decryption algorithm.

Optionally, the live broadcast source station encrypts the live broadcast information stream based on the encryption key generated by a key manager.

Optionally, the method further includes updating a key configuration in a predetermined configuration center from a first state to a second state in response to a failure of the key manager, in which the key configuration in the first state indicates performing encryption and decryption on the live broadcast information stream based on a key pair generated by the key manager, and the key configuration in the second state indicates performing encryption and decryption on the live broadcast information stream based on a predetermined key pair. A predetermined encryption key in the predetermined key pair is stored in the live broadcast source station, and a predetermined decryption key in the predetermined key pair is stored in an audience client.

Optionally, the method further includes receiving a second stream pulling request sent by the audience client of the target live broadcast room, in which the second stream pulling request includes an identification of the audience client and a room identification of the target live broadcast room; obtaining a stream pulling address corresponding to a second encrypted information stream from the live broadcast source station in response to detecting the encryption live broadcast indication, in which the second encrypted information stream is obtained by encrypting the live broadcast information stream based on the predetermined encryption key, and the stream pulling address indicates an address of an information stream distribution client of the second encrypted information stream; and sending the stream pulling address and a locally-stored predetermined verification token to the audience client, in which the predetermined verification token is used to instruct the audience client to decrypt the second encrypted information stream based on the predetermined decryption key.

Optionally, the live broadcast request includes an anchor identification of the anchor client, and obtaining the encryption permission recognition result by recognizing the encryption permission for the target live broadcast room includes determining an encryption configuration of the target live broadcast room based on the anchor identification, in which the encryption configuration is predetermined by the anchor client, and used to indicate whether to encrypt the live broadcast information stream of the target live broadcast room; and generating the encryption permission recognition result based on the encryption configuration.

Optionally, the live broadcast request includes an anchor identification of the anchor client, and obtaining the encryption permission recognition result by recognizing the encryption permission for the target live broadcast room includes determining a target live broadcast type of the target live broadcast room based on the anchor identification; and obtaining the encryption permission recognition result by recognizing the encryption permission for the target live broadcast type based on a predetermined encryption live broadcast type.

According to another aspect of embodiments of the disclosure, a method for processing a live broadcast information stream is provided. The method includes receiving a live broadcast information stream of a target live broadcast room sent by an anchor client based on a stream pushing address and obtaining a target encryption key in a target key pair corresponding to the target live broadcast room in response to obtaining an encryption live broadcast indication of the target live broadcast room from a live broadcast server. The encryption live broadcast indication is used to indicate encryption of live broadcast information stream. The method further includes obtaining a target encrypted information stream by encrypting the live broadcast information stream based on the target encryption key, and sending the target encrypted information stream to an information stream distribution client.

Optionally, obtaining the target encryption key in the target key pair corresponding to the target live broadcast room includes determining an encryption key in a key pair obtained from a key manager as the target encryption key.

Optionally, the method further includes updating a key configuration in a predetermined configuration center from a first state to a second state in response to a failure of the key manager, in which the key configuration in the first state indicates performing encryption and decryption on the live broadcast information stream based on the key pair generated by the key manager, and the key configuration in the second state indicates performing encryption and decryption on the live broadcast information stream based on a predetermined key pair, in which the predetermined key pair includes a predetermined encryption key stored locally and a predetermined decryption key stored in an audience client.

Optionally, obtaining the target encryption key in the target key pair corresponding to the target live broadcast room includes determining the predetermined encryption key as the target encryption key.

Optionally, the method further includes recording an address of the information stream distribution client as a stream pulling address.

Optionally, the method further includes receiving a request for obtaining the stream pulling address sent by the live broadcast server in response to detecting the encryption live broadcast indication during a stream pulling stage; and sending the stream pulling address to the live broadcast server, so that the live broadcast server sends the stream pulling address to an audience client of the target live broadcast room, in which the stream pulling address is used to obtain the target encrypted information stream from the information distribution client.

According to another aspect of embodiments of the disclosure, a method for processing a live broadcast information stream is provided. The method includes receiving an encryption key obtaining request from a live broadcast source station in response to the live broadcast source station obtaining an encryption live broadcast indication of a target live broadcast room. The encryption live broadcast indication is used to instruct the live broadcast source station to encrypt live broadcast information stream of the target live broadcast room. The method further includes generating a key pair corresponding to the target live broadcast room, and the key pair includes an encryption key and sending the encryption key to the live broadcast source station. The live broadcast source station is configured to obtain a first encrypted information stream by encrypting the live broadcast information stream based on the encryption key.

Optionally, the method further includes receiving a token obtaining request sent by the live broadcast server in response to a first stream pulling request of an audience client, in which the token obtaining request includes an identification of the audience client and a room identification of the target live broadcast room; generating a verification token based on the identification of the audience client and the room identification, in which the verification token is used to verify an identity of the audience client in response to the audience client obtaining a decryption key in the key pair from a key manager; and sending the verification token to the live broadcast server.

Optionally, the token obtaining request further includes version information of a live broadcast application of the audience client, and sending the verification token to the live broadcast server includes obtaining a compatibility verification result by performing version compatibility verification based on the version information; and sending the verification token to the live broadcast server in response to the compatibility verification result indicating that the version information includes an application version compatible with an encryption and decryption algorithm corresponding to the key pair.

Optionally, the method further includes sending version update information to the live broadcast server in response to the compatibility verification result indicating that the version information does not include the application version compatible with the encryption and decryption algorithm, in which the live broadcast server is configured to send the version update information to the audience client, in which the version update information is used to prompt the audience client to update the live broadcast application to the application version compatible with the encryption and decryption algorithm.

Optionally, the method further includes receiving a decryption key obtaining request sent by an audience client, in which the decryption key obtaining request includes a verification token; obtaining an identity verification result by verifying an identity of the audience client based on the verification token; and sending a decryption key in the key pair to the audience client in response to the identity verification result indicating that the identity is successfully verified, in which the decryption key is used to decrypt the first encrypted information stream.

According to another aspect of embodiments of the disclosure, an apparatus for processing a live broadcast information stream is provided. The apparatus includes: an encryption permission recognizing module, configured to obtain an encryption permission recognition result by recognizing an encryption permission for a target live broadcast room in response to a live broadcast request of the target live broadcast room sent by an anchor client; an information generating module, configured to generate an encryption live broadcast indication and a stream pushing address of the target live broadcast room in response to the encryption permission recognition result indicating that the target live broadcast room is an encrypted live broadcast room, in which the encryption live broadcast indication is used to instruct a live broadcast source station to encrypt live broadcast information stream of the target live broadcast room; and a stream pushing address sending module, configured to send the stream pushing address corresponding to the target live broadcast room to the anchor client, in which the stream pushing address indicates an address of the live broadcast source station.

Optionally, the apparatus further includes a first stream pulling request receiving module, configured to receive a first stream pulling request sent by an audience client of the target live broadcast room, in which the first stream pulling request includes an identification of the audience client and a room identification of the target live broadcast room; an information obtaining module, configured to obtain a verification token generated based on the identification of the audience client and the room identification from a key manager in response to detecting the encryption live broadcast indication, and to obtain a stream pulling address corresponding to a first encrypted information stream from the live broadcast source station, in which the first encrypted information stream is obtained by encrypting the live broadcast information stream based on an encryption key in a key pair generated by the key manager, and the stream pulling address indicates an address of an information stream distribution client of the first encrypted information stream; and a first information sending module, configured to send the stream pulling address and the verification token to the audience client, in which the verification token is used to verify an identity of the audience client in response to the audience client obtaining an decryption key in the key pair from the key manager, and the stream pulling address is used to obtain the first encrypted information stream from the information stream distribution client, and the audience client is configured to obtain the live broadcast information stream by decrypting the first encrypted information stream based on the decryption key.

Optionally, the information obtaining module includes: a first token obtaining request sending unit, configured to send a token obtaining request to the key manager, in which the token obtaining request includes the identification of the audience client and the room identification, and the identification of the audience client and the room identification are used to generate the verification token; and a first verification token receiving unit, configured to receive the verification token sent by the key manager.

Optionally, the first stream pulling request further includes version information of a live broadcast application of the audience client, and the information obtaining module includes a second token obtaining request sending unit, configured to send a token obtaining request to the key manager, in which the token obtaining request includes the version information, the identification of the audience client and the room identification, the version information is used to perform version compatibility verification, and the identification of the audience client and the room identification are used to generate the verification token; and a second verification token receiving unit, configured to receive the verification token sent by the key manager in response to a result of the version compatibility verification indicating that the version information includes an application version compatible with an encryption and decryption algorithm corresponding to the key pair.

Optionally, the apparatus further includes a first version update information sending module, configured to send version update information to the audience client in response to the result of the version compatibility verification indicating that the version information does not include the application version compatible with the encryption and decryption algorithm, in which the version update information is used to prompt the audience client to update the live broadcast application to the application version compatible with the encryption and decryption algorithm.

Optionally, the live broadcast source station encrypts the live broadcast information stream based on the encryption key generated by a key manager.

Optionally, the apparatus further includes a first state updating module, configured to update a key configuration in a predetermined configuration center from a first state to a second state in response to a failure of the key manager, in which the key configuration in the first state indicates performing encryption and decryption on the live broadcast information stream based on a key pair generated by the key manager, and the key configuration in the second state indicates performing encryption and decryption on the live broadcast information stream based on a predetermined key pair. A predetermined encryption key in the predetermined key pair is stored in the live broadcast source station, and a predetermined decryption key in the predetermined key pair is stored in an audience client.

Optionally, the apparatus further includes a second stream pulling request receiving module, configured to receive a second stream pulling request sent by the audience client of the target live broadcast room, in which the second stream pulling request includes an identification of the audience client and a room identification of the target live broadcast room; a stream pulling address obtaining module, configured to obtain a stream pulling address corresponding to a second encrypted information stream from the live broadcast source station in response to detecting the encryption live broadcast indication, in which the second encrypted information stream is obtained by encrypting the live broadcast information stream based on the predetermined encryption key, and the stream pulling address indicates an address of an information stream distribution client of the second encrypted information stream; and a second information sending module, configured to send the stream pulling address and a locally-stored predetermined verification token to the audience client, in which the predetermined verification token is used to instruct the audience client to decrypt the second encrypted information stream based on the predetermined decryption key.

Optionally, the live broadcast request includes an anchor identification of the anchor client, and the encryption permission recognizing module includes an encryption configuration determining unit, configured to determine an encryption configuration of the target live broadcast room based on the anchor identification, in which the encryption configuration is predetermined by the anchor client, and used to indicate whether to encrypt the live broadcast information stream of the target live broadcast room; and an encryption permission recognition result generating unit, configured to generate the encryption permission recognition result based on the encryption configuration.

Optionally, the live broadcast request includes an anchor identification of the anchor client, and the encryption permission recognizing module includes a target live broadcast type determining unit, configured to determine a target live broadcast type of the target live broadcast room based on the anchor identification; and an encryption permission recognizing unit, configured to obtain the encryption permission recognition result by recognizing the encryption permission for the target live broadcast type based on a predetermined encryption live broadcast type.

According to another aspect of embodiments of the disclosure, an apparatus for processing a live broadcast information stream is provided. The apparatus includes: a live broadcast information stream receiving module, configured to receive a live broadcast information stream of a target live broadcast room sent by an anchor client based on a stream pushing address; a target encryption key obtaining module, configured to obtain a target encryption key in a target key pair corresponding to the target live broadcast room in response to obtaining an encryption live broadcast indication of the target live broadcast room from a live broadcast server, in which the encryption live broadcast indication is used to indicate encryption of live broadcast information stream; an encrypting module, configured to obtain a target encrypted information stream by encrypting the live broadcast information stream based on the target encryption key; and a target encrypted information stream sending module, configured to send the target encrypted information stream to an information stream distribution client.

Optionally, the target encryption key obtaining module includes an encryption key obtaining unit, configured to obtain an encryption key in a key pair from a key manager; and a first target encryption key determining unit, configured to determine the encryption key as the target encryption key.

Optionally, the apparatus further includes a second state updating module, configured to update a key configuration in a predetermined configuration center from a first state to a second state in response to a failure of the key manager, in which the key configuration in the first state indicates performing encryption and decryption on the live broadcast information stream based on the key pair generated by the key manager, and the key configuration in the second state indicates performing encryption and decryption on the live broadcast information stream based on a predetermined key pair, in which the predetermined key pair includes a predetermined encryption key stored locally and a predetermined decryption key stored in an audience client.

Optionally, the target encryption key obtaining module includes a second target encryption key determining unit, configured to determine the predetermined encryption key as the target encryption key.

Optionally, the apparatus further includes a stream pulling address recording module, configured to record an address of the information stream distribution client as a stream pulling address.

Optionally, the apparatus further includes a stream pulling address obtaining request receiving module, configured to receive a request for obtaining the stream pulling address sent by the live broadcast server in response to detecting the encryption live broadcast indication during a stream pulling stage; and a stream pulling address sending module, configured to send the stream pulling address to the live broadcast server, so that the live broadcast server sends the stream pulling address to an audience client of the target live broadcast room, in which the stream pulling address is used to obtain the target encrypted information stream from the information distribution client.

According to another aspect of embodiments of the disclosure, an apparatus for processing a live broadcast information stream is provided. The apparatus includes: an encryption key obtaining request receiving module, configured to receive an encryption key obtaining request from a live broadcast source station in response to the live broadcast source station obtaining an encryption live broadcast indication of a target live broadcast room, in which the encryption live broadcast indication is used to instruct the live broadcast source station to encrypt live broadcast information stream of the target live broadcast room; a key pair generating module, configured to generate a key pair corresponding to the target live broadcast room, in which the key pair includes an encryption key; and an encryption key sending module, configure to send the encryption key to the live broadcast source station, in which the live broadcast source station is configured to obtain a first encrypted information stream by encrypting the live broadcast information stream based on the encryption key.

Optionally, the apparatus further includes a token obtaining request receiving module, configured to receive a token obtaining request sent by the live broadcast server in response to a first stream pulling request of an audience client, in which the token obtaining request includes an identification of the audience client and a room identification of the target live broadcast room; a verification token generating module, configured to generate a verification token based on the identification of the audience client and the room identification, in which the verification token is used to verify an identity of the audience client in response to the audience client obtaining a decryption key in the key pair from a key manager; and a verification token sending module, configured to send the verification token to the live broadcast server.

Optionally, the token obtaining request further includes version information of a live broadcast application of the audience client, and the verification token sending module includes a version compatibility verifying unit, configured to obtain a compatibility verification result by performing version compatibility verification based on the version information; and a verification token sending unit, configured to send the verification token to the live broadcast server in response to the compatibility verification result indicating that the version information includes an application version compatible with an encryption and decryption algorithm corresponding to the key pair.

Optionally, the apparatus further includes a second version update information sending module, configured to send version update information to the live broadcast server in response to the compatibility verification result indicating that the version information does not include the application version compatible with the encryption and decryption algorithm, in which the live broadcast server is configured to send the version update information to the audience client, in which the version update information is used to prompt the audience client to update the live broadcast application to the application version compatible with the encryption and decryption algorithm.

Optionally, the apparatus further includes a decryption key obtaining request receiving module, configured to receive a decryption key obtaining request sent by an audience client, in which the decryption key obtaining request includes a verification token; an identity verifying module, configured to obtain an identity verification result by verifying an identity of the audience client based on the verification token; and a decryption key sending module, configured to send a decryption key in the key pair to the audience client in response to the identity verification result indicating that the identity is successfully verified, in which the decryption key is used to decrypt the first encrypted information stream.

According to another aspect of embodiments of the disclosure, a system for processing a live broadcast information stream is provided. The system includes an anchor client, a live broadcast server, a live broadcast source station and an information stream distribution client. The anchor client is configured to send a live broadcast request of a target live broadcast room to the live broadcast server, and send a live broadcast information stream of the target live broadcast room to the live broadcast source station based on a stream pushing address. The live broadcast server is configured to obtain an encryption permission recognition result by recognizing an encryption permission for the target live broadcast room, generate an encryption live broadcast indication and the stream pushing address of the target live broadcast room in response to the encryption permission recognition result indicating that the target live broadcast room is an encrypted live broadcast room, and send the stream pushing address to the anchor client. The live broadcast source station is configured to obtain a target encryption key in a target key pair corresponding to the target live broadcast room in response to obtaining the encryption live broadcast indication, obtain a target encrypted information stream by encrypting the live broadcast information stream based on the target encryption key, and send the target encrypted information stream to the information stream distribution client. The information stream distribution client is configured to store the target encrypted information stream.

According to another aspect of embodiments of the disclosure, an electronic device is provided, and includes: a processor; a memory configured to store instructions executable by the processor; the processor is configured to execute the instructions to perform the method for processing a live broadcast information stream according to embodiments of the first aspect, the second aspect or the third aspect.

According to another aspect of embodiments of the disclosure, a computer readable storage medium is provided. When instructions in the computer readable storage medium are performed by a processor of an electronic device, the electronic device is caused to perform the method for processing a live broadcast information stream according to embodiments of the first aspect, the second aspect or the third aspect.

According to another aspect of embodiments of the disclosure, a computer program product is provided. When the computer program product runs on a computer, the computer is caused to perform the method for processing a live broadcast information stream according to embodiments of the first aspect, the second aspect or the third aspect.

The technical solution of the disclosure may have the following beneficial effects.

By recognizing the encryption permission for the target live broadcast room which performs live broadcast, the live broadcast information stream which needs to be kept secret can be recognized accurately and effectively, such that the live broadcast information stream can be encrypted during the stream pushing stage to enhance the security of the live broadcast information stream during the live broadcast. In this way, even the stream pulling address is maliciously stolen by the third party, the encrypted live broadcast information stream cannot be played by the third party, thus achieving an effect of keeping the live broadcast information stream secret and protecting the copyright of the live broadcast information stream.

It should be understood that, the above general descriptions and latter detailed descriptions are only illustrative and descriptive, and may not be a limitation of the disclosure.

### BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification, and does not constitute a limitation of the disclosure.
FIG. 1 is a schematic diagram illustrating an application environment according to an embodiment.
FIG. 2 is a flowchart illustrating a method for processing a live broadcast information stream according to an embodiment.
FIG. 3 is a flowchart illustrating a stream pulling method a according to an embodiment.
FIG. 4 is a flowchart illustrating a process that a live broadcast server obtains a verification token generated based on an identification of an audience client and a room identification from a key manager according to an embodiment.
FIG. 5 is a flowchart illustrating another stream pulling method a according to an embodiment.
FIG. 6 is a flowchart illustrating a method for processing a live broadcast information stream according to an embodiment.
FIG. 7 is a flowchart illustrating a method for processing a live broadcast information stream according to an embodiment.
FIG. 8 is a flowchart illustrating a method for processing a live broadcast information stream according to an embodiment.
FIG. 9 is a block diagram illustrating an apparatus for processing a live broadcast information stream according to an embodiment.
FIG. 10 is a block diagram illustrating an apparatus for processing a live broadcast information stream according to an embodiment.
FIG. 11 is a block diagram illustrating an apparatus for processing a live broadcast information stream according to an embodiment.
FIG. 12 is a block diagram illustrating an electronic device applicable for processing a live broadcast information stream according to an embodiment.

### DETAILED DESCRIPTION

In order to make those skilled in the art better understand the technical solutions of the present disclosure, the technical solutions in the disclosure are described clearly and completely below with reference to the accompanying drawings in the embodiments of the disclosure.

It should be noted that the terms "first", "second" and the like in the specification, the claims and the above attached drawings in the disclosure are used to distinguish similar objects, and are not necessarily used to describe a specific order or precedence order. It should be understood that the data used herein may be interchanged where appropriate, so that the embodiments of the disclosure described herein may be implemented in a sequence other than illustrated or described herein. The implementations described in the following exemplary embodiments do not represent all implementations consistent with the present disclosure. Rather, they are merely examples of apparatuses and methods consistent with some aspects of the present disclosure as detailed in the appended claims.

It should be noted that user information (including, but not limited to, device information and personal information of a user, and the like) and data (including, but not limited to, data to be displayed, analyzed data and so on) involved in the disclosure refers to information and data which are authorized by the user or by all parties.

In the related art, typically, the security of the live broadcast information stream is guaranteed by setting a password for the live broadcast room or verifying an audience client which enters the live broadcast room. The above related art substantially prevents an unverified user from obtaining a real stream address of the live broadcast information stream. However, the unauthorized third party may obtain the stream address of the accessible live broadcast information stream by listening or intercepting a request and a response of a normal user client which has passed the verification or stealing the password of the live broadcast, which causes a security problem that the live broadcast information stream is revealed.

The disclosure provides a method, an apparatus and a system for processing a live broadcast information stream, an electronic device, and a storage medium, to at least solve the security problem that the live broadcast information stream is revealed. The technical solution of the disclosure will be described as follows.

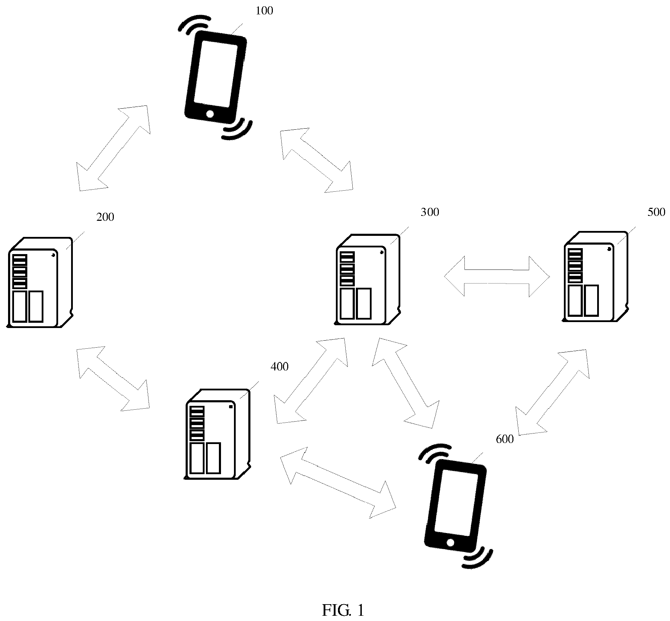

FIG. 1 is a schematic diagram illustrating an application environment according to an embodiment. As illustrated in FIG. 1, the application environment may include an anchor client 100, a live broadcast server 200, a live broadcast source station 300, a key manager 400, an information stream distribution client 500 and an audience client 600.

In an alternative embodiment, the anchor client 100 may be a terminal corresponding to any anchor on a live broadcast platform. The live broadcast server 200 may be a background server of the live broadcast platform, which may provide background services during a live broadcast. The live broadcast source station 300 may be configured to store a live broadcast information stream, encrypt the live broadcast information stream, and transmit the encrypted information stream to the information stream distribution client 500. In detail, the live broadcast source station may be a server. The key manager 400 may be configured to manage a key pair for encryption and decryption on the live broadcast information stream. In detail, the live broadcast source station may be a server. The information stream distribution client 500 may be configured to provide the encrypted live broadcast information stream orienting to the audience client. In detail, the live broadcast source station may be a server, and the audience client 600 may be a terminal corresponding to an audience in a target live broadcast room where the anchor client 100 is located on the live broadcast platform.

In an embodiment, the above terminal may include, but is not limited to, a smart phone, a desktop computer, a tablet computer, a notebook computer, a smart speaker, a digital assistant, an augmented reality (AR)/virtual reality (VR) device, a smart wearable device or other electronic devices, also may be software running on the above electronic device, such as an application program, and so on. Alternatively, an operating system running on the electronic device may include, but is not limited to, Android System, IOS System, Linux, Windows and so on.

In an alternative embodiment, the above server may be a separate physical server, or may be a server cluster or a distributed system consisting of a plurality of physical servers, also may be a cloud server which provides cloud services, cloud databases, cloud computing, cloud functions, cloud storages, web services, cloud communications, middleware services, domain name services, security services, content delivery network (CDN), basic cloud computing services such as big data and artificial intelligence platform.

Further, it should be noted that, FIG. 1 merely illustrates one kind of application environment provided by the disclosure, however, in practical applications, there may be other application environments, for example, including more terminals.

In an embodiment, a direct or indirect connection may be established between the anchor client 100, the live broadcast server 200, the live broadcast source station 300, the key manager 400, the information stream distribution client 500 and the audience client 600 mentioned above via a wired or wireless communication mode, which is not limited herein.

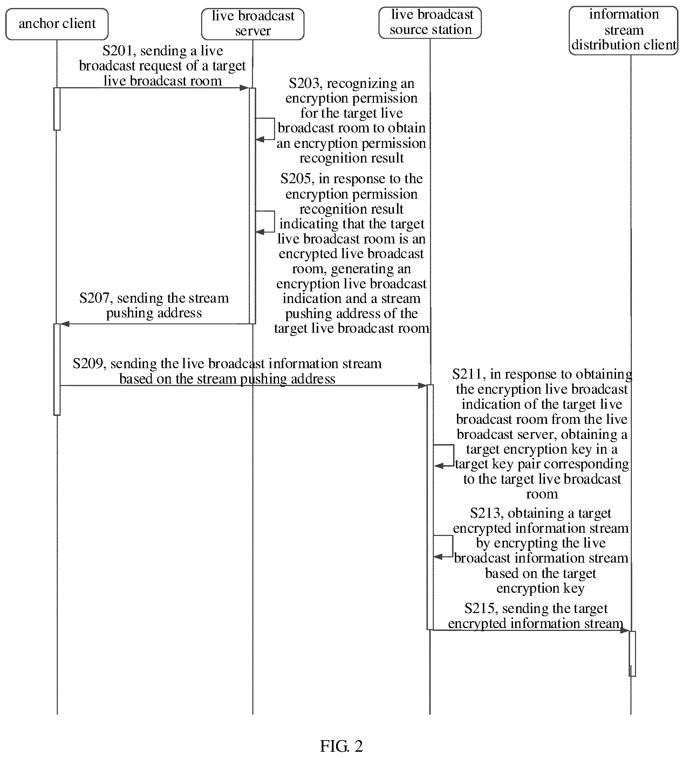

FIG. 2 is a flowchart illustrating a method for processing a live broadcast information stream according to an embodiment. As illustrated in FIG. 2, the method for processing a live broadcast information stream is applied in a terminal electronic device, and may include the following steps.

At block S201, an anchor client sends a live broadcast request of a target live broadcast room to a live broadcast server.

In an embodiment, the target live broadcast room may be a live broadcast room which is currently opened by the anchor client. In a practice application, when an anchor needs to start a live broadcast, the live broadcast request may be sent to the live broadcast server based on a corresponding terminal (the anchor client). Generally, the live broadcast request may carry an anchor identification of the anchor client, so that the live broadcast server may distinguish the live broadcast requests from different anchor clients. In detail, the anchor identification may include but is not limited to an identification used to identify the anchor client uniquely, such as an anchor account.

At block S203, the live broadcast sever recognizes an encryption permission for the target live broadcast room to obtain an encryption permission recognition result.

In an embodiment, the live broadcast sever may obtain the encryption permission recognition result by recognizing the encryption permission for the target live broadcast room as follows.

The live broadcast sever determines a target live broadcast type of the target live broadcast room based on the anchor identification, and obtains the encryption permission recognition result by recognizing the encryption permission for target live broadcast type based on a predetermined encryption live broadcast type.

In a practice application, since different anchor clients correspond to different live broadcast contents, by combining with the live broadcast content, the live broadcast type can be set for the live broadcast rooms opened by different anchor clients. In an embodiment, for example, the live broadcast content of a live broadcast room is a game live broadcast, correspondingly, the live broadcast type of the live broadcast room is a game type. Alternatively, for example, the live broadcast content of a live broadcast room is an internal transaction publishing live broadcast of an enterprise, correspondingly, the live broadcast type of the live broadcast room is an internal transaction publishing type.

In an embodiment, the predetermined encryption live broadcast type may be a predetermined live broadcast type for which the live broadcast information stream needs to be encrypted. In detail, the predetermined encryption live broadcast type may be set in combination with a requirement for encrypting the live broadcast information stream in the practice application. Alternatively, the above internal transaction publishing live broadcast faces internal personnel, correspondingly, the internal transaction publishing type may be configured as the predetermined encryption live broadcast type.

In an embodiment, if the predetermined encryption live broadcast type includes the target live broadcast type, correspondingly, the encryption permission recognition result may indicate that the target live broadcast room is an encrypted live broadcast room, otherwise, if the predetermined encryption live broadcast type does not include the target live broadcast type, the encryption permission recognition result may indicate that the target live broadcast room is an unencrypted live broadcast room. In detail, the encrypted live broadcast room refers to a live broadcast room where live broadcast information stream needs to be encrypted. The unencrypted live broadcast room refers to a live broadcast room where live broadcast information stream needs not to be encrypted.

In addition, it should be noted that, the above internal transaction publishing type is merely an example of the predetermined encryption live broadcast type. In practice applications, other or more live broadcast types can be configured as the predetermined encryption live broadcast type by combining with requirements.

In an embodiment, when the live broadcast is started, the encryption permission is recognized in combination with the live broadcast type, such that the live broadcast information stream which needs to be encrypted may be actually determined based on requirements of different live broadcast types, thus improving security of the live broadcast information stream.

In another alternative embodiment, the encryption permission recognition result may be obtained by recognizing the encryption permission for the target live broadcast room as follows.

An encryption configuration of the target live broadcast room is determined based on the anchor identification, and the encryption permission recognition result is generated based on the encryption configuration.

In an embodiment, the encryption configuration may be set by the anchor client in advance, which indicates whether to encrypt the live broadcast information stream of the target live broadcast room. Correspondingly, after the encryption configuration of the target live broadcast room corresponding to the anchor client is determined in combination with the anchor identification, if the encryption configuration indicates that the live broadcast information stream of the target live broadcast room needs to be encrypted, correspondingly, the encryption permission recognition result may indicate that the target live broadcast room is an encrypted live broadcast room. If the encryption configuration indicates that the live broadcast information stream of the target live broadcast room needs not to be encrypted, correspondingly, the encryption permission recognition result may indicate that the target live broadcast room is an unencrypted live broadcast room.

In the above embodiment, when the live broadcast is started, the encryption permission is recognized in combination with information indicating whether to encrypt the live broadcast information stream of the target live broadcast room that is pre-configured by the anchor, such that the live broadcast information stream can be encrypted based on the user's requirements, thus meeting the user's requirements preferably while improving security of the live broadcast information stream.

At block S205, in response to the encryption permission recognition result indicating that the target live broadcast room is an encrypted live broadcast room, the live broadcast server generates an encryption live broadcast indication and a stream pushing address of the target live broadcast room.

In practice applications, if the encryption permission recognition result indicating that the target live broadcast room is an encrypted live broadcast room, the live broadcast server generates the encryption live broadcast indication while assigning the stream pushing address to the target live broadcast room. The encryption live broadcast indication may be used to instruct a live broadcast source station to encrypt the live broadcast information stream of the target live broadcast room. Alternatively, the encryption live broadcast indication may be a character string or the like. In detail, the live broadcast information stream may be a live broadcast information stream collected by the anchor client during the live broadcast of the target live broadcast room.

In an embodiment, the stream pushing address may be an address of the live broadcast source station for storing the live broadcast information stream of the target live broadcast room.

In an embodiment, in response to receiving the live broadcast request, the live broadcast server may generate a corresponding room identification for the target live broadcast room. In detail, the room identification may be used to identify different live broadcast rooms. In detail, the room identification may be a character string or the like.

In an embodiment, after the room identification is generated, live broadcast attribute information of the target live broadcast room can be combined. In detail, the live broadcast attribute information may be attribute information related to a live broadcast room maintained by the live broadcast server for different live broadcast rooms. In an embodiment, the live broadcast attribute information may include the room identification, the stream pushing address, the encryption live broadcast indication (if the live broadcast room is an encrypted live broadcast room). Correspondingly, when generating the live broadcast attribute information of the target live broadcast room, the live broadcast attribute information of the target live broadcast room can be generated in combination with the room identification, the encryption live broadcast indication and other information of the target live broadcast room.

At block S207, the live broadcast server sends the stream pushing address to the anchor client.

In an embodiment, when the live broadcast server sends the stream pushing address to the anchor client, the room identification of the target live broadcast room can be carried. During subsequent interaction between the anchor client and other clients, the target live broadcast room can be identified by carrying the room identification of the target live broadcast room.

At block S209, the anchor client sends the live broadcast information stream of the target live broadcast room to the live broadcast source station based on the stream pushing address.

In an embodiment, when the anchor client sends the live broadcast information stream of the target live broadcast room to the live broadcast source station based on the stream pushing address, the room identification of the target live broadcast room can be carried, so that the live broadcast source station may distinguish the live broadcast information streams of different live broadcast rooms.

At block S211, in response to obtaining the encryption live broadcast indication of the target live broadcast room from the live broadcast server, the live broadcast source station obtains a target encryption key in a target key pair corresponding to the target live broadcast room.

In practice applications, after the anchor client pushes the collected live broadcast information stream to the live broadcast source station, the live broadcast source station may read out the live broadcast attribution information of the live broadcast room from the live broadcast server. In detail, in the process that the live broadcast source station requests the live broadcast attribution information of the target live broadcast room from the live broadcast server, the room identification of the target live broadcast room may be carried, so that the live broadcast server may determine the live broadcast attribution information of the target live broadcast room by combining with the room identification. In detail, for the live broadcast room where live broadcast information stream needs to be encrypted, the obtained live broadcast attribution information may include the encryption live broadcast indication. Correspondingly, at the time when the live broadcast attribution information is obtained, the encryption live broadcast indication can be obtained. Based on the encryption live broadcast indication, the live broadcast source station may start a process of encrypting the live broadcast information stream.

In an alternative embodiment, the target key pair may be a key pair generated in real time by the key manager for the live broadcast information stream of the target live broadcast room. Alternatively, if the key manager fails, the target key pair may also include a predetermined encryption key in a predetermined key pair stored in the live broadcast source station in advance and a predetermined decryption key in the predetermined key pair stored in the audience client in advance.

In an alternative embodiment, if the key manager runs normally, the live broadcast source station may obtain the target encryption key in the target key pair corresponding to the target live broadcast room as follows.

The live broadcast source station obtains the encryption key in the key pair from the key manager, and determines the encryption key as the target encryption key.

In an embodiment, the live broadcast source station may request the encryption key from the key manager. The key manager may generate the key pair corresponding to the room identification and including the encryption key and the decryption key, and sends the encryption key to the live broadcast source station.

In an embodiment, a key configuration is maintained by a predetermined configuration center which may be monitored by the live broadcast source station and the live broadcast server, so that switching can be performed between two encryption and decryption modes during the live broadcast by combining with an operation state of the key manager, thus greatly improving availability of encryption and decryption services.

In an alternative embodiment, in order to facilitate encryption and decryption of the live broadcast information stream of the target live broadcast room using two kinds of target key pairs, the above method further includes monitoring the key configuration of the predetermined configuration center by the live broadcast source station and the live broadcast server.

In an embodiment, an initial state of the key configuration is a first state. The key configuration in the first state indicates performing encryption and decryption on the live broadcast information stream based on the key pair generated by the key manager.

In an embodiment, if the key manager fails in the process that the live broadcast source station obtains the encryption key from the key manager, a link via which the live broadcast source station obtains the encryption key from the key manager fails. Alternatively, the above method may further include updating the key configuration of the predetermined configuration center from the first state to the second state in response to a failure of the key manager. The key configuration in the second state indicates performing encryption and decryption on the live broadcast information stream based on the predetermined key pair.

In an alternative embodiment, if the key manager fails, which causes that the key pair cannot be obtained from the key manager, correspondingly, the live broadcast source station may obtain the target encryption key in the target key pair corresponding to the target live broadcast room as follows.

The live broadcast source station determines the predetermined encryption key as the target encryption key.

In the above embodiment, in case that the live broadcast source station finds that the link of obtaining the encryption key from the key manager fails, by updating the key configuration of the predetermined configuration center from the first state to the second state, the encryption and decryption process may be switched from performing the encryption and decryption on the live broadcast information stream based on the key pair generated in real time by the key manger to performing the encryption and decryption on the live broadcast information stream based on the predetermined key pair, thus greatly improving availability of encryption and decryption services.

At block S213, the live broadcast source station obtains a target encrypted information stream by encrypting the live broadcast information stream based on the target encryption key.

In practice applications, during the live broadcast, stream pushing and pulling may be performed on the live broadcast information stream based on a certain frequency, for example per frame, correspondingly, during the stream pushing and pulling, the encryption and decryption can be performed per frame.

In an embodiment, an encryption and decryption algorithm corresponding to the target key pair may be a symmetric encryption algorithm or may be an asymmetric cryptographic algorithm. In detail, the encryption and decryption algorithm can be set in combination with the practice application in advance, so that the encryption and decryption can be performed in combination with the corresponding algorithm.

In an alternative embodiment, the target encrypted information stream may be a first encrypted information stream which is obtained by encrypting the live broadcast information stream based on the encryption key in the key pair generated by the key manager. Alternatively, the target encrypted information stream may be a second encrypted information stream which is obtained by encrypting the live broadcast information stream based on the predetermined encryption key.

At block S215, the live broadcast source station sends the target encrypted information stream to an information stream distribution client.

In an embodiment, the live broadcast source station may send the target encrypted information stream to the information stream distribution client after encrypting the live broadcast information stream of the target live broadcast room.

In an alternative embodiment, the above method may further includes recording an address corresponding to the information stream distribution client as a stream pulling address by the live broadcast source station.

In the above embodiment, by recording the address corresponding to the information stream distribution client as the stream pulling address, a storage address of the target encrypted information stream may be determined during the subsequent stream pulling stage.

According to the technical solution provided in the embodiment of the disclosure, by recognizing the encryption permission for the target live broadcast room which performs live broadcast, the live broadcast information stream which needs to be kept secret can be recognized accurately and effectively, such that the live broadcast information stream can be encrypted during the stream pushing stage to enhance the security of the live broadcast information stream during the live broadcast. In this way, even the stream pulling address is maliciously stolen by the third party, the encrypted live broadcast information stream cannot be played by the third party, thus achieving an effect of keeping the live broadcast information stream secret and protecting the copyright of the live broadcast information stream.

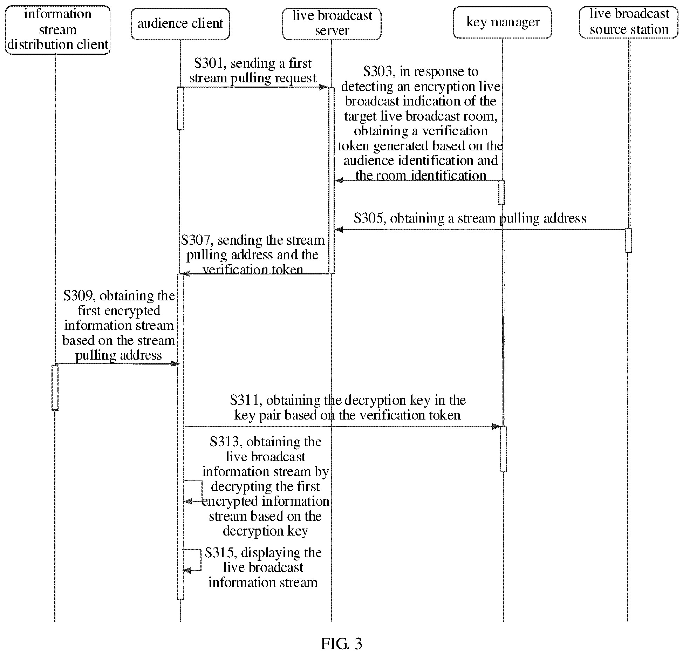

In an alternative embodiment, the above method may further include steps in the stream pulling stage. Alternatively, as illustrated in FIG. 3, the stream pulling stage may include the following steps.

At block S301, an audience client of a target live broadcast room sends a first stream pulling request to a live broadcast server.

In an embodiment, the first stream pulling request includes an audience identification of the audience client and a room identification of the target live broadcast room. In an embodiment, the audience identification may be used to identify an identification of the audience client. In an embodiment, the audience identification may include, but is not limited to, an account of a user corresponding to the audience client, a device identification corresponding to the audience client, and so on.

At block S303, in response to the live broadcast server detecting an encryption live broadcast indication of the target live broadcast room, a verification token generated based on the audience identification and the room identification is obtained from a key manager.

In an embodiment, the live broadcast server detects live broadcast attribution information of the target live broadcast room, if the live broadcast attribution information includes the encryption live broadcast indication, the key manager is called to obtain the verification token. In an alternative embodiment, one live broadcast room may corresponding to one key pair, and the key pair cannot be changed easily during the whole live broadcast, thus having a long life cycle. Since the key pair is essential data during the whole process, and the audience client is at the user size, the data of the audience client is easy to counterfeit or intercept, such that an identity of the audience client can be verified in combination with the verification token during a process of issuing the decryption key.

In an alternative embodiment, the live broadcast server may obtain the verification token generated based on the audience identification and the room identification from the key manager as follows. The live broadcast server sends a token obtaining request to the key manager. The token obtaining request includes the audience identification and the room identification. Correspondingly, the key manager may grenade the verification token by combining with the audience identification and the room identification, and sends the verification token to the live broadcast server.

In detail, the verification token may be used to verify the identity of the audience client when the audience client obtains the decryption key in a key pair from the key manager.

In the above embodiment, the verification token is generated in combination with the audience identification and the room identification, which may facilitate verifying the identities of different audience clients of different live broadcast rooms, thus improving security of the stream pulling stage.

Alternatively, in order to avoid the problem of leakage of the live broadcast information stream caused by issuing the decryption key to an illegal third party, when the verification token is generated, an expiry date can be set for the verification token. Correspondingly, the verification token generated in combination with the audience identification and the room identification may be a verification token with a certain expiry date, such that the time for deciphering can be reduced due to the expiry date, thus decreasing a risk of deciphering.

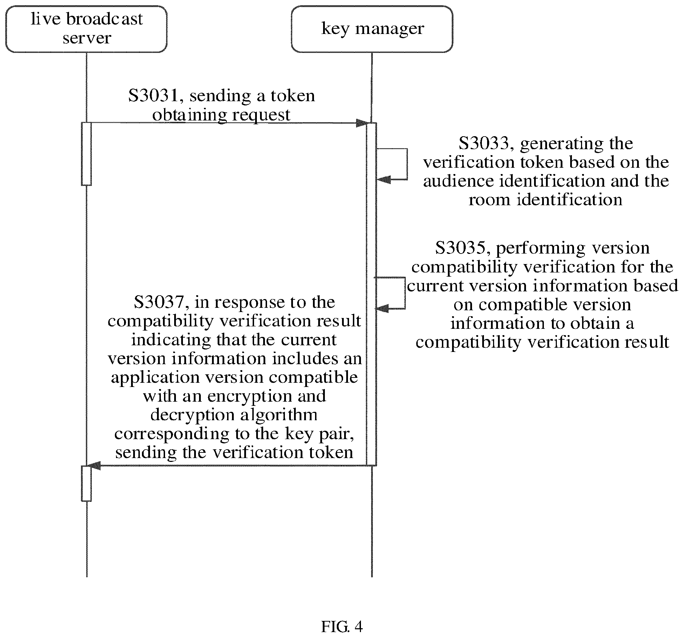

In another alternative embodiment, the first stream pulling request may further include current version information of a live broadcast application of the audience client. Correspondingly, as illustrated in FIG. 4, the live broadcast server may obtain the verification token generated based on the audience identification and the room identification from the key manager as follows.

At block S3031, the live broadcast server sends a token obtaining request to the key manager. The token obtaining request includes the current version information, the audience identification and the room identification.

At block S3033, the key manager generates the verification token based on the audience identification and the room identification.

At block S3035, the key manager performs version compatibility verification for the current version information based on compatible version information to obtain a compatibility verification result.

In an embodiment, the audience identification and the room identification can be converted to the verification token based on a predetermined message-digest algorithm. In an alternative embodiment, the predetermined message-digest algorithm may include, but is not limited to, a MD5 message-digest algorithm.

At block S3037, in response to the compatibility verification result indicating that the current version information includes an application version compatible with an encryption and decryption algorithm corresponding to the key pair generated by the key manager, the key manager sends the verification token to the live broadcast server.

In an embodiment, the above current version information is used to perform the version compatibility verification. The above audience identification and the room identification are used to generate the verification token.

In an embodiment, the compatible version information may be a lowest application version (version number) compatible with the encryption and decryption algorithm corresponding to the key pair generated by the key manager. Correspondingly, if the current version information is consistent with the compatible version information or higher than the compatible version information, the compatibility verification result indicating that the current version information includes the application version compatible with the encryption and decryption algorithm corresponding to the key pair. If the current version information is lower than the compatible version information, the compatibility verification result indicating that the current version information does not include the application version compatible with the encryption and decryption algorithm corresponding to the key pair.

In an alternative embodiment, the version compatibility verification can be performed firstly. Correspondingly, in response to the compatibility verification result indicating that the current version information includes the application version compatible with the encryption and decryption algorithm corresponding to the key pair generated by the key manager, the key manager generates the verification token based on the audience identification and the room identification, and sends the verification token to the live broadcast server.

In the above embodiment, during the process of issuing the verification token used to verify the identity of the audience client, the version compatibility verification can be performed on the current version information of the live broadcast application carried in the stream puling request, such that a success rate of decrypting the first encrypted information stream by the audience client can be effectively ensured.

In an alternative embodiment, the above method may further include sending by the key manager version update information to the live broadcast server in response to the compatibility verification result indicating that the current version information does not include the application version compatible with the encryption and decryption algorithm corresponding to the key pair, and forwarding by the live broadcast server the version update information to the audience client.

In an embodiment, the above version update information may be used to prompt the audience client to update the live broadcast application to the application version compatible with the encryption and decryption algorithm corresponding to the key pair. Correspondingly, the audience client may update the application version of the live broadcast application based on the version update information.

In the above embodiment, in response to the compatibility verification result indicating that the current version information does not include the application version compatible with the encryption and decryption algorithm corresponding to the key pair, by sending the version update information to the audience client, the audience client may be prompted to update the live broadcast application to the application version compatible with the encryption and decryption algorithm corresponding to the key pair, thus effectively ensuring a success rate of decrypting the first encrypted information stream by the audience client.

At block S305, the live broadcast server obtains a stream pulling address from the live broadcast source station.

In an embodiment, the live broadcast server may request the stream pulling address corresponding to the live broadcast information stream of the target live broadcast room from the live broadcast source station by combining with the room identification of the target live broadcast room.

At block S307, the live broadcast server sends the stream pulling address and the verification token to the audience client.

In an embodiment, the live broadcast server splices the verification token to the stream pulling address, and then sends the spliced verification token and stream pulling address to the audience client.

At block S309, the audience client obtains the first encrypted information stream from the information stream distribution client based on the stream pulling address.

In an embodiment, the audience client may request the first encrypted information stream from the information stream distribution client based on the stream pulling address.

In an alternative embodiment, the audience client may pass through the stream pulling address downward to a player built in the live broadcast application corresponding to the audience client. The player may parse parameters after receiving the stream pulling address. If it parsed that the verification token is included in the stream pulling address, the decryption is performed on the information stream.

At block S311, the audience client obtains the decryption key in the key pair from the key manager based on the verification token.

In an embodiment, after obtaining the verification token, the audience client may request exchanging the verification token for the decryption key to the key manager. Alternatively, the key manager may verify the identity of the audience client by combining with the verification token. Alternatively, in response to the verification token having an expiry date, the key manager may check the expiry date of the verification token. Alternatively, parameters such as the audience identification and the room identification required by generating the verification token can be carried when requesting the description key, to further verify the identity of the audience client. In detail, in responses to successfully verifying the identity, the key manager may send the corresponding description key to the audience client.

In an embodiment, the player built in the live broadcast application corresponding to the audience client may call an underlying security component to request the decryption key to the key manager. In detail, the security component may be a functional component for requesting the decryption key built in the live broadcast application.

At block S313, the audience client obtains the live broadcast information stream by decrypting the first encrypted information stream based on the decryption key.

At block S315, the audience client displays the live broadcast information stream.

In the above embodiment, in case that the key manager runs normally, after the live broadcast server receives the first stream pulling request from the audience client, the verification token for verifying the identity of the audience client may be obtained from the key manager while feeding back the stream pulling address, and the verification token is returned to the audience client, so that when the audience client requests the decryption key, the key manger may verify the identity of the audience client by combining with the verification token, thus greatly enhancing security of the live broadcast information stream.

In an alternative embodiment, if the key manger fails, not only the link via which the live broadcast source station obtains the decryption key from the key manager fails but also the link via which the live broadcast server obtains the verification token from the key manager may fail. Generally, if the link via which the live broadcast server obtains the verification token from the key manager fails, the link via which the audience client obtains the decryption key from the key manager subsequently fails. Alternatively, the above method may further include updating by the live broadcast server the key configuration from the first state to the second state in response to a failure of the key manager. The key configuration in the second state indicates performing encryption and decryption on the live broadcast information stream based on the predetermined key pair.

In the above embodiment, in response to the live broadcast server finding that the link of obtaining the verification token from the key manager fails, by updating the key configuration of the predetermined configuration center from the first state to the second state, the whole encryption and decryption process may be quickly switched from performing the encryption and decryption on the live broadcast information stream based on the key pair generated in real time by the key manager to performing the encryption and decryption on the live broadcast information stream based on the predetermined key pair, thus greatly improving availability of encryption and decryption services.

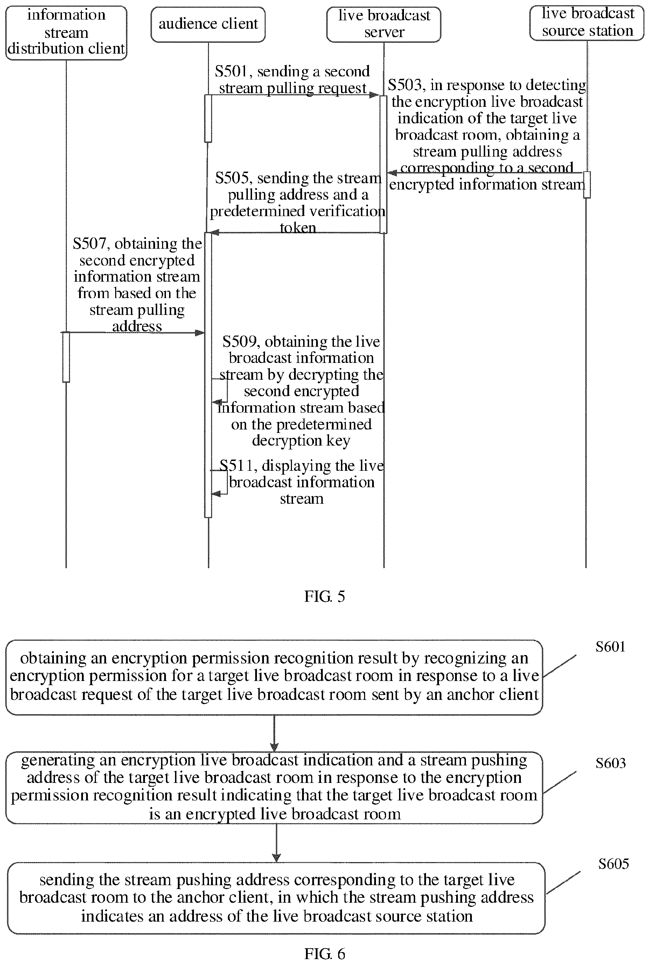

In an alternative embodiment, if the key manager fails, as illustrated in FIG. 5, the above stream pulling stage may include the following steps.

At block S501, the audience client of the target live broadcast room sends a second stream pulling request to the live broadcast server.

In an alternative embodiment, the above second stream pulling request may include the audience identification of the audience client and a room identification of the target live broadcast room.

At block S503, in response to detecting the encryption live broadcast indication of the target live broadcast room, the live broadcast server obtains a stream pulling address corresponding to a second encrypted information stream from the live broadcast source station.

At block S505, the live broadcast server sends the stream pulling address corresponding to the second encrypted information stream and a locally stored predetermined verification token to the audience client.

In an embodiment, the predetermined verification token may be used to instruct the audience client to decrypt the second encrypted information stream based on the predetermined decryption key. The second encrypted information stream is obtained by decrypting the live broadcast information stream based on the predetermined encryption key. The stream pulling address is an address of the information stream distribution client of the second encrypted information stream.

At block S507, the audience client obtains the second encrypted information stream from the information stream distribution client based on the stream pulling address.

At block S509, the audience client obtains the live broadcast information stream by decrypting the second encrypted information stream based on the predetermined decryption key.

At block S511, the audience client displays the live broadcast information stream.

In the above embodiment, in response to a failure of the key manager, after receiving the second stream pulling request from the audience client, the live broadcast server may return to the predetermined verification token to the audience client while feeding back the stream pulling address, so that the audience client may directly decrypt the second encrypted information stream based on the predetermined decryption key locally stored in the audience client, and the switching between the two kinds of decryption modes can be achieved in time while ensuring security of the live broadcast information stream, thus greatly improving availability of encryption and decryption services.

The method for processing a live broadcast information stream according to an embodiment of the preset disclosure will be described below by taking a live broadcast server as an execution subject. FIG. 6 is a flowchart illustrating a method for processing a live broadcast information stream according to an embodiment. As illustrated in FIG. 6, the method may include the following steps.

At block S601, an encryption permission recognition result is obtained by recognizing an encryption permission for a target live broadcast room in response to a live broadcast request of the target live broadcast room sent by an anchor client.

At block S603, an encryption live broadcast indication and a stream pushing address of the target live broadcast room are generated in response to the encryption permission recognition result indicating that the target live broadcast room is an encrypted live broadcast room. The encryption live broadcast indication is used to instruct a live broadcast source station to encrypt a live broadcast information stream of the target live broadcast room.

At block S605, the stream pushing address corresponding to the target live broadcast room is sent to the anchor client. The stream pushing address indicates an address of the live broadcast source station.

Alternatively, the method further includes receiving a first stream pulling request sent by an audience client of the target live broadcast room, in which the first stream pulling request includes an identification of the audience client and a room identification of the target live broadcast room; obtaining a verification token generated based on the identification of the audience client and the room identification from a key manager in response to detecting the encryption live broadcast indication; obtaining a stream pulling address corresponding to a first encrypted information stream from the live broadcast source station, in which the first encrypted information stream is obtained by encrypting the live broadcast information stream based on an encryption key in a key pair generated by the key manager, and the stream pulling address indicates an address of an information stream distribution client of the first encrypted information stream; and sending the stream pulling address and the verification token to the audience client, in which the verification token is used to verify an identity of the audience client in response to the audience client obtaining an decryption key in the key pair from the key manager, and the stream pulling address is used to obtain the first encrypted information stream from the information stream distribution client, so that the audience client obtains the live broadcast information stream by decrypting the first encrypted information stream based on the decryption key.

Alternatively, obtaining the verification token generated based on the identification of the audience client and the room identification from the key manager includes sending a token obtaining request to the key manager, in which the token obtaining request includes the identification of the audience client and the room identification, and the identification of the audience client and the room identification are used to generate the verification token; and receiving the verification token sent by the key manager.

Alternatively, the first stream pulling request further includes version information of a live broadcast application of the audience client, and obtaining the verification token generated based on the identification of the audience client and the room identification from the key manager includes sending a token obtaining request to the key manager, in which the token obtaining request includes the version information, the identification of the audience client and the room identification, the version information is used to perform version compatibility verification, and the identification of the audience client and the room identification are used to generate the verification token; and receiving the verification token sent by the key manager in response to a result of the version compatibility verification indicating that the version information includes an application version compatible with an encryption and decryption algorithm corresponding to the key pair.

Alternatively, the method further includes sending version update information to the audience client in response to the result of the version compatibility verification indicating that the version information does not include the application version compatible with the encryption and decryption algorithm, in which the version update information is used to prompt the audience client to update the live broadcast application to the application version compatible with the encryption and decryption algorithm.

Alternatively, the live broadcast source station encrypts the live broadcast information stream based on an encryption key generated by a key manager.

Alternatively, the method further includes updating a key configuration in a predetermined configuration center from a first state to a second state in response to a failure of the key manager, in which the key configuration in the first state indicates performing encryption and decryption on the live broadcast information stream based on a key pair generated by the key manager, and the key configuration in the second state indicates performing encryption and decryption on the live broadcast information stream based on a predetermined key pair. A predetermined encryption key of the predetermined key pair is stored in the live broadcast source station, and a predetermined decryption key of the predetermined key pair is stored in an audience client.

Alternatively, the method further includes receiving a second stream pulling request sent by the audience client of the target live broadcast room, in which the second stream pulling request includes an identification of the audience client and a room identification of the target live broadcast room; obtaining a stream pulling address corresponding to a second encrypted information stream from the live broadcast source station in response to detecting the encryption live broadcast indication, in which the second encrypted information stream is obtained by encrypting the live broadcast information stream based on the predetermined encryption key, and the stream pulling address indicates an address of an information stream distribution client of the second encrypted information stream; and sending the stream pulling address and a locally-stored predetermined verification token to the audience client, in which the predetermined verification token is used to instruct the audience client to decrypt the second encrypted information stream based on the predetermined decryption key.

Alternatively, the live broadcast request includes an anchor identification of the anchor client, and obtaining the encryption permission recognition result by recognizing the encryption permission for the target live broadcast room includes determining an encryption configuration of the target live broadcast room based on the anchor identification, in which the encryption configuration is predetermined by the anchor client, and used to indicate whether to encrypt the live broadcast information stream of the target live broadcast room; and generating the encryption permission recognition result based on the encryption configuration.

Alternatively, the live broadcast request includes an anchor identification of the anchor client, and obtaining the encryption permission recognition result by recognizing the encryption permission for the target live broadcast room includes determining a target live broadcast type of the target live broadcast room based on the anchor identification; and obtaining the encryption permission recognition result by recognizing the encryption permission for the target live broadcast type based on a predetermined encryption live broadcast type.

Regarding the method of the above embodiment, a specific way of performing each step has been described in detail in the interaction embodiment of the method, which is not elaborated herein.

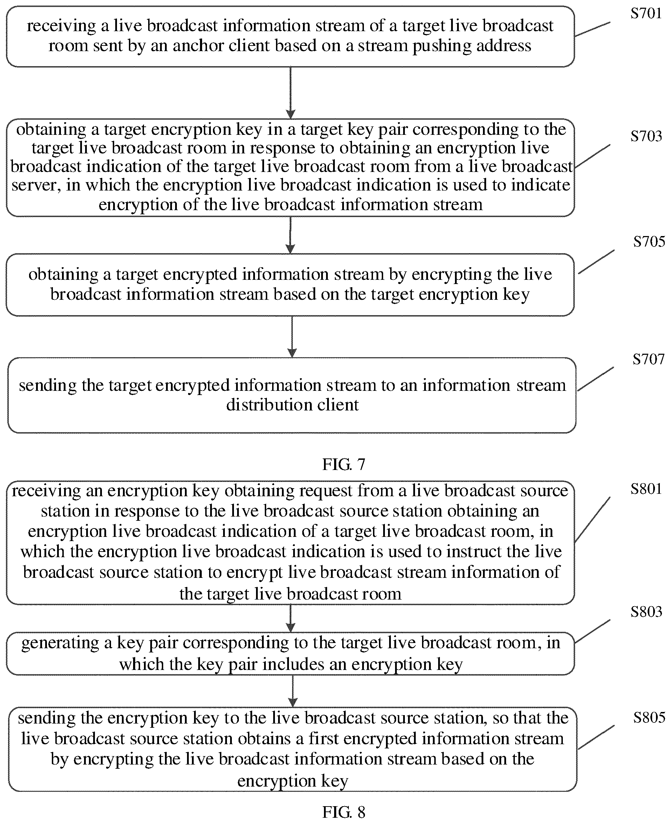

The method for processing a live broadcast information stream according to an embodiment of the preset disclosure will be described below by taking a live broadcast source station as an execution subject. FIG. 7 is a flowchart illustrating a method for processing a live broadcast information stream according to an embodiment. As illustrated in FIG. 7, the method may include the following steps.

At block S701, a live broadcast information stream of a target live broadcast room sent by an anchor client based on a stream pushing address is received.

At block S703, a target encryption key in a target key pair corresponding to the target live broadcast room is obtained in response to obtaining an encryption live broadcast indication of the target live broadcast room from a live broadcast server. The encryption live broadcast indication is used to indicate encryption of live broadcast information stream.

At block S705, a target encrypted information stream is obtained by encrypting the live broadcast information stream based on the target encryption key.

At block S707, the target encrypted information stream is sent to an information stream distribution client.

Alternatively, obtaining the target encryption key in the target key pair corresponding to the target live broadcast room includes determining an encryption key in a key pair obtained from a key manager as the target encryption key.

Alternatively, the method further includes updating a key configuration in a predetermined configuration center from a first state to a second state in response to a failure of the key manager, in which the key configuration in the first state indicates performing encryption and decryption on the live broadcast information stream based on the key pair generated by the key manager, and the key configuration in the second state indicates performing encryption and decryption on the live broadcast information stream based on a predetermined key pair, in which the predetermined key pair includes a predetermined encryption key stored locally and a predetermined decryption key stored in an audience client.

Alternatively, obtaining the target encryption key in the target key pair corresponding to the target live broadcast room includes determining the predetermined encryption key as the target encryption key.

Alternatively, the method further includes recording an address of the information stream distribution client as a stream pulling address.

Alternatively, the method further includes receiving a request for obtaining the stream pulling address sent by the live broadcast server in response to detecting the encryption live broadcast indication during a stream pulling stage; and sending the stream pulling address to the live broadcast server, so that the live broadcast server sends the stream pulling address to an audience client of the target live broadcast room, in which the stream pulling address is used to obtain the target encrypted information stream from the information stream distribution client.

Regarding the method of the above embodiment, a specific way of performing each step has been described in detail in the interaction embodiment of the method, which is not elaborated herein.

The method for processing a live broadcast information stream according to an embodiment of the preset disclosure will be described below by taking a key manager as an execution subject. FIG. 8 is a flowchart illustrating a method for processing a live broadcast information stream according to an embodiment. As illustrated in FIG. 8, the method may include the following steps.

At block S801, an encryption key obtaining request from a live broadcast source station is received in response to the live broadcast source station obtaining an encryption live broadcast indication of a target live broadcast room. The encryption live broadcast indication is used to instruct the live broadcast source station to encrypt live broadcast information stream of the target live broadcast room.

At block S803, a key pair corresponding to the target live broadcast room is generated, in which the key pair includes an encryption key.

At block S805, the encryption key is sent to the live broadcast source station, so that the live broadcast source station obtains a first encrypted information stream by encrypting the live broadcast information stream based on the encryption key.

Alternatively, the method further includes receiving a token obtaining request sent by the live broadcast server in response to a first stream pulling request of an audience client, in which the token obtaining request includes an identification of the audience client and a room identification of the target live broadcast room; generating a verification token based on the identification of the audience client and the room identification, in which the verification token is used to verify an identity of the audience client in response to the audience client obtaining a decryption key in the key pair from a key manager; and sending the verification token to the live broadcast server.

Alternatively, the token obtaining request further includes version information of a live broadcast application of the audience client, and sending the verification token to the live broadcast server includes obtaining a compatibility verification result by performing version compatibility verification based on the version information; and sending the verification token to the live broadcast server in response to the compatibility verification result indicating that the version information includes an application version compatible with an encryption and decryption algorithm corresponding to the key pair.

Alternatively, the method further includes sending version update information to the live broadcast server in response to the compatibility verification result indicating that the version information does not include the application version compatible with the encryption and decryption algorithm, so that the live broadcast server sends the version update information to the audience client, in which the version update information is used to prompt the audience client to update the live broadcast application to the application version compatible with the encryption and decryption algorithm.

Alternatively, the method further includes receiving a decryption key obtaining request sent by an audience client, in which the decryption key obtaining request includes a verification token; obtaining an identity verification result by verifying an identity of the audience client based on the verification token; and sending a decryption key in the key pair to the audience client in response to the identity verification result indicating that the identity is successfully verified, in which the decryption key is used to decrypt the first encrypted information stream.

Regarding the method of the above embodiment, a specific way of performing each step has been described in detail in the interaction embodiment of the method, which is not elaborated herein.

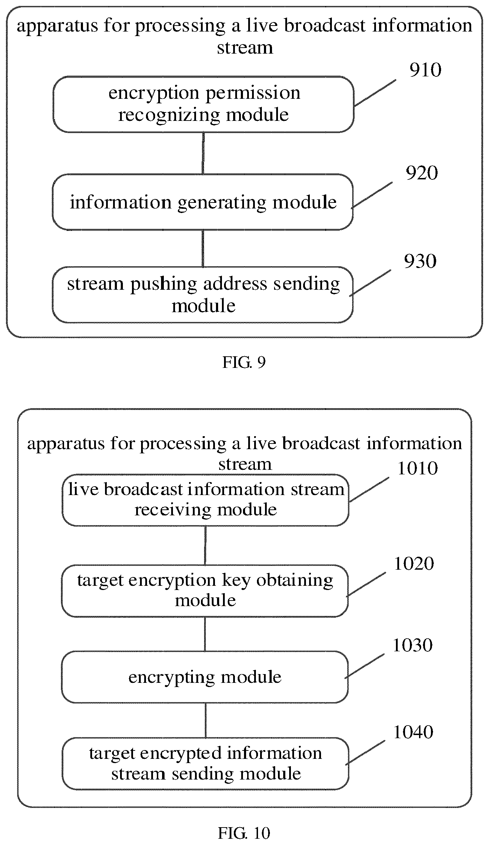

FIG. 9 is a block diagram illustrating an apparatus for processing a live broadcast information stream according to an embodiment. As illustrated in FIG. 9, the apparatus may include an encryption permission recognizing module 910, an information generating module 920, and a stream pushing address sending module 930.

The encryption permission recognizing module 910 is configured to obtain an encryption permission recognition result by recognizing an encryption permission for a target live broadcast room in response to a live broadcast request of the target live broadcast room sent by an anchor client.

The information generating module 920 is configured to generate an encryption live broadcast indication and a stream pushing address of the target live broadcast room in response to the encryption permission recognition result indicating that the target live broadcast room is an encrypted live broadcast room, in which the encryption live broadcast indication is used to instruct a live broadcast source station to encrypt live broadcast information stream of the target live broadcast room.

The stream pushing address sending module 930 is configured to send the stream pushing address corresponding to the target live broadcast room to the anchor client, in which the stream pushing address indicates an address of the live broadcast source station.

Alternatively, the apparatus further includes a first stream pulling request receiving module, configured to receive a first stream pulling request sent by an audience client of the target live broadcast room, in which the first stream pulling request includes an identification of the audience client and a room identification of the target live broadcast room; an information obtaining module, configured to obtain a verification token generated based on the identification of the audience client and the room identification from a key manager in response to detecting the encryption live broadcast indication, and to obtain a stream pulling address corresponding to a first encrypted information stream from the live broadcast source station, in which the first encrypted information stream is obtained by encrypting the live broadcast information stream based on an encryption key in a key pair generated by the key manager, and the stream pulling address indicates an address of an information stream distribution client of the first encrypted information stream; and a first information sending module, configured to send the stream pulling address and the verification token to the audience client, in which the verification token is used to verify an identity of the audience client in response to the audience client obtaining an decryption key in the key pair from the key manager, and the stream pulling address is used to obtain the first encrypted information stream from the information stream distribution client, so that the audience client obtains the live broadcast information stream by decrypting the first encrypted information stream based on the decryption key.

Alternatively, the information obtaining module includes: a first token obtaining request sending unit, configured to send a token obtaining request to the key manager, in which the token obtaining request includes the identification of the audience client and the room identification, and the identification of the audience client and the room identification are used to generate the verification token; and a first verification token receiving unit, configured to receive the verification token sent by the key manager.

Alternatively, the first stream pulling request further includes version information of a live broadcast application of the audience client, and the information obtaining module includes a second token obtaining request sending unit, configured to send a token obtaining request to the key manager, in which the token obtaining request includes the version information, the identification of the audience client and the room identification, the version information is used to perform version compatibility verification, and the identification of the audience client and the room identification are used to generate the verification token; and a second verification token receiving unit, configured to receive the verification token sent by the key manager in response to a result of the version compatibility verification indicating that the version information includes an application version compatible with an encryption and decryption algorithm corresponding to the key pair.

Alternatively, the apparatus further includes a first version update information sending module, configured to send version update information to the audience client in response to the result of the version compatibility verification indicating that the version information does not include the application version compatible with the encryption and decryption algorithm, in which the version update information is used to prompt the audience client to update the live broadcast application to the application version compatible with the encryption and decryption algorithm.

Alternatively, the live broadcast source station encrypts the live broadcast information stream based on an encryption key generated by a key manager.

Alternatively, the apparatus further includes a first state updating module, configured to update a key configuration in a predetermined configuration center from a first state to a second state in response to a failure of the key manager, in which the key configuration in the first state indicates performing encryption and decryption on the live broadcast information stream based on a key pair generated by the key manager, and the key configuration in the second state indicates performing encryption and decryption on the live broadcast information stream based on a predetermined key pair. A predetermined encryption key of the predetermined key pair is stored in the live broadcast source station, and a predetermined decryption key of the predetermined key pair is stored in an audience client.

Alternatively, the apparatus further includes a second stream pulling request receiving module, configured to receive a second stream pulling request sent by the audience client of the target live broadcast room, in which the second stream pulling request includes an identification of the audience client and a room identification of the target live broadcast room; a stream pulling address obtaining module, configured to obtain a stream pulling address corresponding to a second encrypted information stream from the live broadcast source station in response to detecting the encryption live broadcast indication, in which the second encrypted information stream is obtained by encrypting the live broadcast information stream based on the predetermined encryption key, and the stream pulling address indicates an address of an information stream distribution client of the second encrypted information stream; and a second information sending module, configured to send the stream pulling address and a locally-stored predetermined verification token to the audience client, in which the predetermined verification token is used to instruct the audience client to decrypt the second encrypted information stream based on the predetermined decryption key.

Alternatively, the live broadcast request includes an anchor identification of the anchor client, and the encryption permission recognizing module includes an encryption configuration determining unit, configured to determine an encryption configuration of the target live broadcast room based on the anchor identification, in which the encryption configuration is predetermined by the anchor client, and used to indicate whether to encrypt the live broadcast information stream of the target live broadcast room; and an encryption permission recognition result generating unit, configured to generate the encryption permission recognition result based on the encryption configuration.

Alternatively, the live broadcast request includes an anchor identification of the anchor client, and the encryption permission recognizing module includes a target live broadcast type determining unit, configured to determine a target live broadcast type of the target live broadcast room based on the anchor identification; and an encryption permission recognizing unit, configured to obtain the encryption permission recognition result by recognizing the encryption permission for the target live broadcast type based on a predetermined encryption live broadcast type.

Regarding the apparatus of the above embodiment, a specific way of performing operations of each module has been described in detail in the method embodiment, which is not elaborated herein.

FIG. 10 is a block diagram illustrating an apparatus for processing a live broadcast information stream according to an embodiment. As illustrated in FIG. 10, the apparatus may include a live broadcast information stream receiving module 1010, a target encryption key obtaining module 1020, an encrypting module 1030 and a target encrypted information stream sending module 1040.

The live broadcast information stream receiving module 1010 is configured to receive a live broadcast information stream of a target live broadcast room sent by an anchor client based on a stream pushing address.

The target encryption key obtaining module 1020 is configured to obtain a target encryption key in a target key pair corresponding to the target live broadcast room in response to obtaining an encryption live broadcast indication of the target live broadcast room from a live broadcast server, in which the encryption live broadcast indication is used to indicate encryption of live broadcast information stream.

The encrypting module 1030 is configured to obtain a target encrypted information stream by encrypting the live broadcast information stream based on the target encryption key.

The target encrypted information stream sending module 1040 is configured to send the target encrypted information stream to an information stream distribution client.

Alternatively, the target encryption key obtaining module 1020 includes an encryption key obtaining unit, configured to obtain an encryption key in a key pair from a key manager; and a first target encryption key determining unit, configured to determine the encryption key as the target encryption key.

Alternatively, the apparatus further includes a second state updating module, configured to update a key configuration in a predetermined configuration center from a first state to a second state in response to a failure of the key manager, in which the key configuration in the first state indicates performing encryption and decryption on the live broadcast information stream based on the key pair generated by the key manager, and the key configuration in the second state indicates performing encryption and decryption on the live broadcast information stream based on a predetermined key pair, in which the predetermined key pair includes a predetermined encryption key stored locally and a predetermined decryption key stored in an audience client.

Alternatively, the target encryption key obtaining module 1020 includes a second target encryption key determining unit, configured to determine the predetermined encryption key as the target encryption key.

Alternatively, the apparatus further includes a stream pulling address recording module, configured to record an address of the information stream distribution client as a stream pulling address.

Alternatively, the apparatus further includes a stream pulling address obtaining request receiving module, configured to receive a request for obtaining the stream pulling address sent by the live broadcast server in response to detecting the encryption live broadcast indication during a stream pulling stage; and a stream pulling address sending module, configured to send the stream pulling address to the live broadcast server, so that the live broadcast server sends the stream pulling address to an audience client of the target live broadcast room, in which the stream pulling address is used to obtain the target encrypted information stream from the information stream distribution client.

Regarding the apparatus of the above embodiment, a specific way of performing operations of each module has been described in detail in the method embodiment, which is not elaborated herein.

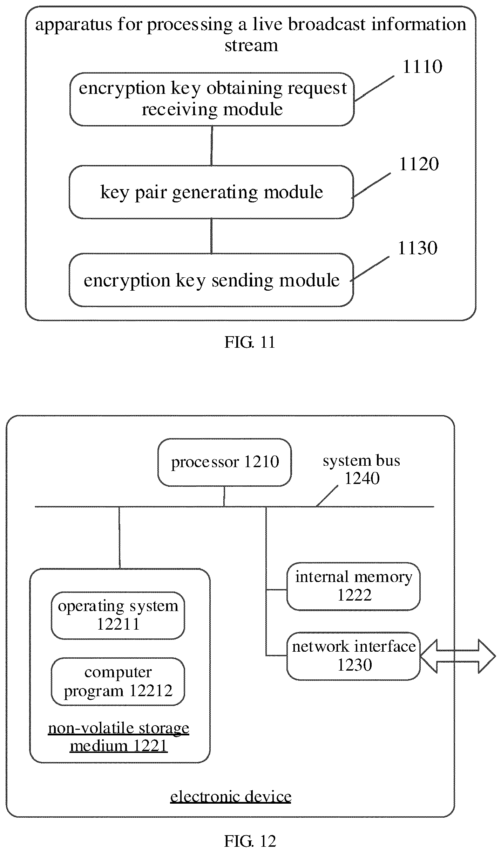

FIG. 11 is a block diagram illustrating an apparatus for processing a live broadcast information stream according to an embodiment. As illustrated in FIG. 11, the apparatus may include an encryption key obtaining request receiving module 1110, a key pair generating module 1120, and an encryption key sending module 1130.

The encryption key obtaining request receiving module 1110 is configured to receive an encryption key obtaining request from a live broadcast source station in response to the live broadcast source station obtaining an encryption live broadcast indication of a target live broadcast room, in which the encryption live broadcast indication is used to instruct the live broadcast source station to encrypt live broadcast information stream of the target live broadcast room.

The key pair generating module 1120 is configured to generate a key pair corresponding to the target live broadcast room, in which the key pair includes an encryption key.

The encryption key sending module 1130 is configure to send the encryption key to the live broadcast source station, so that the live broadcast source station obtains a first encrypted information stream by encrypting the live broadcast information stream based on the encryption key.

Alternatively, the apparatus further includes a token obtaining request receiving module, configured to receive a token obtaining request sent by the live broadcast server in response to a first stream pulling request of an audience client, in which the token obtaining request includes an identification of the audience client and a room identification of the target live broadcast room; a verification token generating module, configured to generate a verification token based on the identification of the audience client and the room identification, in which the verification token is used to verify an identity of the audience client in response to the audience client obtaining a decryption key in the key pair from a key manager; and a verification token sending module, configured to send the verification token to the live broadcast server.

Alternatively, the token obtaining request further includes version information of a live broadcast application of the audience client, and the verification token sending module includes a version compatibility verifying unit, configured to obtain a compatibility verification result by performing version compatibility verification based on the version information; and a verification token sending unit, configured to send the verification token to the live broadcast server in response to the compatibility verification result indicating that the version information includes an application version compatible with an encryption and decryption algorithm corresponding to the key pair.

Alternatively, the apparatus further includes a second version update information sending module, configured to send version update information to the live broadcast server in response to the compatibility verification result indicating that the version information does not include the application version compatible with the encryption and decryption algorithm, so that the live broadcast server sends the version update information to the audience client, in which the version update information is used to prompt the audience client to update the live broadcast application to the application version compatible with the encryption and decryption algorithm.

Alternatively, the apparatus further includes a decryption key obtaining request receiving module, configured to receive a decryption key obtaining request sent by an audience client, in which the decryption key obtaining request includes a verification token; an identity verifying module, configured to obtain an identity verification result by verifying an identity of the audience client based on the verification token; and a decryption key sending module, configured to send a decryption key in the key pair to the audience client in response to the identity verification result indicating that the identity is successfully verified, in which the decryption key is used to decrypt the first encrypted information stream.

Regarding the apparatus of the above embodiment, a specific way of performing operations of each module has been described in detail in the method embodiment, which is not elaborated herein.

The embodiment of the disclosure further provides a system for processing a live broadcast information stream. The system includes an anchor client, a live broadcast server, a live broadcast source station and an information stream distribution client.

The anchor client is configured to send a live broadcast request of a target live broadcast room to the live broadcast server, and send a live broadcast information stream of the target live broadcast room to the live broadcast source station based on a stream pushing address.

The live broadcast server is configured to obtain an encryption permission recognition result by recognizing an encryption permission for the target live broadcast room, generate an encryption live broadcast indication and the stream pushing address of the target live broadcast room in response to the encryption permission recognition result indicating that the target live broadcast room is an encrypted live broadcast room, and send the stream pushing address to the anchor client.

The live broadcast source station is configured to obtain a target encryption key in a target key pair corresponding to the target live broadcast room in response to obtaining the encryption live broadcast indication, obtain a target encrypted information stream by encrypting the live broadcast information stream based on the target encryption key, and send the target encrypted information stream to the information stream distribution client.

The information stream distribution client is configured to store the target encrypted information stream.

Regarding the system of the above embodiment, a specific way of performing operations of each module has been described in detail in the method embodiment, which is not elaborated herein.

FIG. 12 is a block diagram illustrating an electronic device applicable for processing a live broadcast information stream according to an embodiment. The electronic device may be a server, and a structure of the electronic device is illustrated in FIG. 12. The electronic device includes a processor 1210, a memory, and a network interface 1230 connected by a system bus 1240. The processor 1210 of the electronic device is configured to provide computing and control capabilities. The memory of the electronic device includes a non-volatile storage medium 1221 and an internal memory 1222. The non-volatile storage medium 1221 stores an operating system 12211 and a computer program 12212. The internal memory 1222 provides an environment for the execution of the operating system 12211 and computer program 12212 in the non-volatile storage medium 1221. The network interface 1230 of the electronic device is configured to communicate with an external terminal through a network connection. When the computer program is executed by the processor1210, the method for processing a live broadcast information stream is realized.

Those skilled in the art can understand that the structure shown in FIG. 12 is only a block diagram of a partial structure related to the solution of the present disclosure, and does not constitute a limitation on the electronic device to which the solution of the present disclosure is applied. The specific electronic device may include more or fewer components than shown in the figures, or combine certain components, or have a different arrangement of components.

In an embodiment, an electronic device is provided, and includes: a processor; a memory configured to store instructions executable by the processor. The processor is configured to execute the instructions to perform the method for processing a live broadcast information stream according to embodiments of the disclosure.

In an embodiment, a computer readable storage medium is provided. When instructions in the computer readable storage medium are performed by a processor of an electronic device, the electronic device is caused to perform the method for processing a live broadcast information stream according to embodiments of the disclosure.

In an embodiment, a computer program product is provided. When the computer program product runs on a computer, the computer is caused to perform the method for processing a live broadcast information stream according to embodiments of the disclosure.

Those skilled in the art can understand that all or part of the processes in the methods of the above embodiments can be implemented by instructing relevant hardware through a computer program, and the computer program can be stored in a non-volatile computer-readable storage medium, when the computer program is executed, the processes of the above-mentioned method embodiments may be performed. Any reference to memory, storage, database or other medium used in the various embodiments provided in the disclosure may include non-volatile and/or volatile memory. Non-volatile memory may include read only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in various forms such as static RAM (SRAM), dynamic RAM (DRAM), synchronous DRAM (SDRAM), double data rate SDRAM (DDRSDRAM), enhanced SDRAM (ESDRAM), Synchlink DRAM (SLDRAM), Rambus direct RAM (RDRAM), direct Rambus dynamic RAM (DRDRAM), and Rambus dynamic RAM (RDRAM), etc.

After considering the specification and practicing the disclosure herein, those skilled in the art will easily think of other embodiments of the present application. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure.

It should be understood that the present disclosure is not limited to the precise structure described above and shown in the drawings, and various modifications and changes may be made without departing from its scope. The scope of the present application is only limited by the appended claims.

## Claims

1. A method for processing a live broadcast information stream, comprising:
obtaining (S601) an encryption permission recognition result by recognizing an encryption permission for a target live broadcast room in response to a live broadcast request of the target live broadcast room sent by an anchor client;
generating (S603) an encryption live broadcast indication and a stream pushing address of the target live broadcast room in response to the encryption permission recognition result indicating that the target live broadcast room is an encrypted live broadcast room, wherein the encryption live broadcast indication is used to instruct a live broadcast source station to encrypt a live broadcast information stream of the target live broadcast room; and
sending (S605) the stream pushing address corresponding to the target live broadcast room to the anchor client, wherein the stream pushing address indicates an address of the live broadcast source station.

2. The method of claim 1, further comprising:
receiving a first stream pulling request sent by an audience client of the target live broadcast room, wherein the first stream pulling request comprises an identification of the audience client and a room identification of the target live broadcast room;
obtaining a verification token generated based on the identification of the audience client and the room identification from a key manager in response to detecting the encryption live broadcast indication;
obtaining a stream pulling address corresponding to a first encrypted information stream from the live broadcast source station, wherein the first encrypted information stream is obtained by encrypting the live broadcast information stream based on an encryption key in a key pair generated by the key manager, and the stream pulling address indicates an address of an information stream distribution client of the first encrypted information stream; and
sending the stream pulling address and the verification token to the audience client, wherein the verification token is used to verify an identity of the audience client in response to the audience client obtaining an decryption key in the key pair from the key manager, and the stream pulling address is used to obtain the first encrypted information stream from the information stream distribution client, and the audience client is configured to obtain the live broadcast information stream by decrypting the first encrypted information stream based on the decryption key.

3. The method of claim 2, wherein,
said obtaining a verification token generated based on the identification of the audience client and the room identification from a key manager comprises: sending a token obtaining request to the key manager, wherein the token obtaining request comprises the identification of the audience client and the room identification, and the identification of the audience client and the room identification are used to generate the verification token; and receiving the verification token sent by the key manager;
or,
wherein, the first stream pulling request further comprises version information of a live broadcast application of the audience client, and said obtaining a verification token generated based on the identification of the audience client and the room identification from a key manager comprises: sending a token obtaining request to the key manager, wherein the token obtaining request comprises the version information, the identification of the audience client and the room identification, the version information is used to perform version compatibility verification, and the identification of the audience client and the room identification are used to generate the verification token; and receiving the verification token sent by the key manager in response to a result of the version compatibility verification indicating that the version information comprises an application version compatible with an encryption and decryption algorithm corresponding to the key pair; sending version update information to the audience client in response to the result of the version compatibility verification indicating that the version information does not comprise the application version compatible with the encryption and decryption algorithm, wherein the version update information is used to prompt the audience client to update the live broadcast application to the application version compatible with the encryption and decryption algorithm.

4. The method of any of claims 1-3, wherein the live broadcast source station encrypts the live broadcast information stream based on the encryption key generated by a key manager.

5. The method of claim 4, further comprising:
updating a key configuration in a predetermined configuration center from a first state to a second state in response to a failure of the key manager, wherein the key configuration in the first state indicates performing encryption and decryption on the live broadcast information stream based on a key pair generated by the key manager, and the key configuration in the second state indicates performing encryption and decryption on the live broadcast information stream based on a predetermined key pair;
wherein a predetermined encryption key in the predetermined key pair is stored in the live broadcast source station, and a predetermined decryption key in the predetermined key pair is stored in an audience client.

6. The method of claim 5, further comprising:
receiving a second stream pulling request sent by the audience client of the target live broadcast room, wherein the second stream pulling request comprises an identification of the audience client and a room identification of the target live broadcast room;
obtaining a stream pulling address corresponding to a second encrypted information stream from the live broadcast source station in response to detecting the encryption live broadcast indication, wherein the second encrypted information stream is obtained by encrypting the live broadcast information stream based on the predetermined encryption key, and the stream pulling address indicates an address of an information stream distribution client of the second encrypted information stream; and
sending the stream pulling address and a locally-stored predetermined verification token to the audience client, wherein the predetermined verification token is used to instruct the audience client to decrypt the second encrypted information stream based on the predetermined decryption key.

7. The method of any of claims 1-6, wherein,
the live broadcast request comprises an anchor identification of the anchor client, and said obtaining (S601) an encryption permission recognition result by recognizing an encryption permission for a target live broadcast room comprises: determining an encryption configuration of the target live broadcast room based on the anchor identification, wherein the encryption configuration is predetermined by the anchor client, and used to indicate whether to encrypt the live broadcast information stream of the target live broadcast room; and generating the encryption permission recognition result based on the encryption configuration;
or
wherein, the live broadcast request comprises an anchor identification of the anchor client, and said obtaining (S601) an encryption permission recognition result by recognizing an encryption permission for a target live broadcast room comprises: determining a target live broadcast type of the target live broadcast room based on the anchor identification; and obtaining the encryption permission recognition result by recognizing the encryption permission for the target live broadcast type based on a predetermined encryption live broadcast type.

8. A method for processing a live broadcast information stream, comprising:
receiving (S701) a live broadcast information stream of a target live broadcast room sent by an anchor client based on a stream pushing address;
obtaining (S703) a target encryption key in a target key pair corresponding to the target live broadcast room in response to obtaining an encryption live broadcast indication of the target live broadcast room from a live broadcast server, wherein the encryption live broadcast indication is used to indicate encryption of live broadcast information stream;
obtaining (S705) a target encrypted information stream by encrypting the live broadcast information stream based on the target encryption key; and
sending the target encrypted information stream to an information stream distribution client.

9. The method of claim 8, wherein, said obtaining (S703) a target encryption key in a target key pair corresponding to the target live broadcast room comprises:
obtaining an encryption key in a key pair from a key manager; and
determining the encryption key as the target encryption key.

10. The method of claim 9, further comprising:
updating a key configuration in a predetermined configuration center from a first state to a second state in response to a failure of the key manager, wherein the key configuration in the first state indicates performing encryption and decryption on the live broadcast information stream based on the key pair generated by the key manager, and the key configuration in the second state indicates performing encryption and decryption on the live broadcast information stream based on a predetermined key pair, wherein the predetermined key pair comprises a predetermined encryption key stored locally and a predetermined decryption key stored in an audience client.

11. The method of any of claims 8-10, further comprising:
recording an address of the information stream distribution client as a stream pulling address.

12. A method for processing a live broadcast information stream, comprising:
receiving (S801) an encryption key obtaining request from a live broadcast source station in response to the live broadcast source station obtaining an encryption live broadcast indication of a target live broadcast room, wherein the encryption live broadcast indication is used to instruct the live broadcast source station to encrypt live broadcast information stream of the target live broadcast room;
generating (S803) a key pair corresponding to the target live broadcast room, wherein the key pair comprises an encryption key; and
sending (S805) the encryption key to the live broadcast source station, wherein the live broadcast source station is configured to obtain a first encrypted information stream by encrypting the live broadcast information stream based on the encryption key.

13. The method of claim 12, further comprising:
receiving a token obtaining request sent by a live broadcast server in response to a first stream pulling request of an audience client, wherein the token obtaining request comprises an identification of the audience client and a room identification of the target live broadcast room;
generating a verification token based on the identification of the audience client and the room identification, wherein the verification token is used to verify an identity of the audience client in response to the audience client obtaining a decryption key in the key pair from a key manager; and
sending the verification token to the live broadcast server.

14. The method of claim 13, wherein, the token obtaining request further comprises version information of a live broadcast application of the audience client, and said sending the verification token to the live broadcast server comprises:
obtaining a compatibility verification result by performing version compatibility verification based on the version information;
sending the verification token to the live broadcast server in response to the compatibility verification result indicating that the version information comprises an application version compatible with an encryption and decryption algorithm corresponding to the key pair;
sending version update information to the live broadcast server in response to the compatibility verification result indicating that the version information does not comprise the application version compatible with the encryption and decryption algorithm, wherein the live broadcast server is configured to send the version update information to the audience client, wherein the version update information is used to prompt the audience client to update the live broadcast application to the application version compatible with the encryption and decryption algorithm.

15. An electronic device, comprising:
a processor; and
a memory configured to store instructions executable by the processor;
wherein, the processor is configured to execute the instructions to perform the method for processing a live broadcast information stream according to any of claims 1-14.
